# EUROPEAN PATENT APPLICATION

(11) **EP 1 209 592 A1**
(43) Date of publication of application: **29.05.2002**
(21) Application number: 00310548.3
(22) Date of filing: 28.11.2000
(51) Int. Cl.: G06F 17/60

(54) **Method and apparatus for distributing electronic content**

(71) Applicant: Hewlett-Packard Company, A Delaware Corporation, Palo Alto, CA 94304 (US)
(72) Inventor: Rodgers, Peter James, Hillesley, Gloucestershire GL12 7RE (GB); Williamson, Matthew Murray, Bristol BS6 5SJ (GB); Perry, Russell, Almondsbury, Bristol BS32 4EZ (GB)
(74) Representative: Jones, Bruce Graeme Roland

(57) **Abstract**

A method of distributing electronic content such as music or books via the internet involves transmitting licence data with the content. The licence data includes status information indicative of whether the licence is a full licence for content purchased from a content distributor, or temporary for content passed from a full licence owner to a new consumer who has not yet paid for the content. Content is transmitted from one consumer to another for example by PDA wireless transmission, with appropriate licence status data. Connection of a PDA on which content having only temporary licence status is stored to the internet automatically activates the content management program on the PDA to connect to the content distributor and transmit all stored licence status information. Detection of temporary licences by the content distributor triggers a request for payment of the content, and payment results in transmission of replacement licence data having a full licence status back to the consumer. Upon receipt of payment a reward is sent from the distributor to the person who transmitted the content (thus creating the temporary licence) to another consumer, as a kind of sale commission.

## Description

The present invention relates to a method and an apparatus for distributing electronic content, such as electronically stored music or literary works, for example.

The commercial distribution of such content traditionally takes place through retail outlets, such as record or book shops in the case of music or reading material. Commercial distribution of electronic content over an information technology network has many advantages, but has not yet been widely adopted by creators and commercial distributors of such content largely because of fears relating to the resultant increase in potential ease with which such content may be illicitly reproduced, sold and distributed by third parties. For this reason, significant effort has been directed toward the development of technological safeguards which prevent unauthorised copying of electronic content. Traditionally however, it has been found that any technological measure which prevents unauthorised copying is ultimately defeatable by people who wish to produce pirate copies, meaning that new technological safeguards must continually be developed and introduced.

One existing example of the distribution of content via an information technology network is Electronic Book Exchange (EBX), in which a licence or "voucher" is bound to the content of a book, with the terms of the voucher dictating the manner in which the content may be consumed.

The present invention provides an alternative approach to dealing with the issue of unauthorised copying of electronic content by members of the public. One aspect of the present invention lies in an appreciation that unauthorised copying of electronic content may, broadly speaking, be put into two categories: large-scale reproduction of content, by a relatively small number of people and/or organisations for commercial purposes; and the small-scale reproduction of content by a large number of individuals for private consumption. The former activity is typically performed by organised crime for commercial motives, and is therefore unlikely to be prevented by the continual production of increasingly complex technological measures, whereas the latter is frequently an activity motivated by a desire to save money, or the desire to share content with members of the same peer group. A consequence of the motives for private copying is that with appropriate incentives, people can be persuaded to acquire legal copies. One extreme example of this would be if such copies were available free of charge; people would naturally prefer to own a genuine copy of a record by one of their favourite artists than an illicit copy. While this latter example is not a commercially viable proposition, it illustrates that if appropriate incentives can be found, which nonetheless remunerate the owner of the copyright in the content, private illicit copying can largely be eradicated without having to resort to a solution based upon the continual development of technological barriers to prevent copying (and the expense associated with such a strategy).

Accordingly, a first aspect of the present invention provides a method of distributing electronic content comprising the steps of:
selling to a first consumer a first copy of the content, and attaching to the first copy first licence data, including status data indicative of the legitimate nature of the first copy;
copying the first copy to produce a second copy of the content, attaching to the second copy second licence data, including status data indicative of temporary legitimacy of the second copy, and transmitting the second copy and attached licence data to a second consumer.

Preferably, once the content has been transmitted to the second consumer, the second consumer will in due course send to the commercial distributor of the content at least sufficient of the second licence data to enable identification of: (a) the content to which it relates, and (b) the status of the second copy.

The second consumer then has the chance to purchase the content and send to the commercial distributor of the content payment for the second copy of the content; and subsequent to receipt of payment by the commercial distributor, the commercial distributor will send to the second consumer replacement second licence data including at least replacement status data indicative of the legitimate nature of the second copy of the content, and update the replacement second licence data attached to the second copy of the content.

According to one preferred embodiment, transactions between the first and second consumers on the one hand, and the commercial distributor on the other take place across an information technology network such as the internet. By providing suitable identifiers and memory structure for the content sold and licences issued, the commercial distributor will be able to determine, upon receipt of temporary licence data, from which full licence holder the content originated. In the event that the temporary licence holder chooses to purchase a copy of the content (thus converting the temporary licence into a full one) the commercial distributor is then able to reward the full licence holder responsible for transmitting the content. This provides one incentive for consumers to engage in a process of lawful purchase of content, while at the same time benefiting the commercial distributor who has an *ad hoc* sales force at their disposal.

Typically consumers will store content on personal portable storage devices, such as a personal digital assistant ("PDA"), one example of which is the PDA sold under the trademark "Jomada" by Hewlett-Packard Co.. In one preferred embodiment the commercial distributor operates a content store for each registered consumer, which acts as a form of back-up for copies of content. This provides the consumer with substantial flexibility in the way that they wish to manage their content. For example it obviates the need for them to retain continuously a copy of each piece of content they have purchased, thus providing substantial savings in memory space (e.g. in their PDA's). This is yet a further incentive for consumers to engage in lawful purchase of content.

In one preferred embodiment, retrieval of content from local storage (i.e. storage owned by the consumer), and its conversion into an assimilable form is managed by a content management program. Additionally, the content management program automatically causes connection to the commercial distributor when triggered to do so by one or more predetermined events. One example of such an event is the connection of the PDA to the network, typically via a computer, whereupon the content management program dispatches all licence data to the commercial distributor for the distributor to vet for temporary licences or anomalies, such as licences with ID numbers which do not correspond in the records of the commercial distributor to the content in respect of which they have been issued.

Embodiments of the invention will now be described, by way of example, and with reference to the accompanying drawings in which:
Fig. 1 is a schematic representation of a commercial structure for the distribution of content to consumers;
Fig. 2 is a schematic illustration of the architecture of the storage of a commercial distributor, and the transmission of content to a consumer;
Fig. 3 is a schematic illustration of a computer and PDA adapted to manage electronic content; and
Figs. 4 to 6 are schematic illustrations of further transactions.

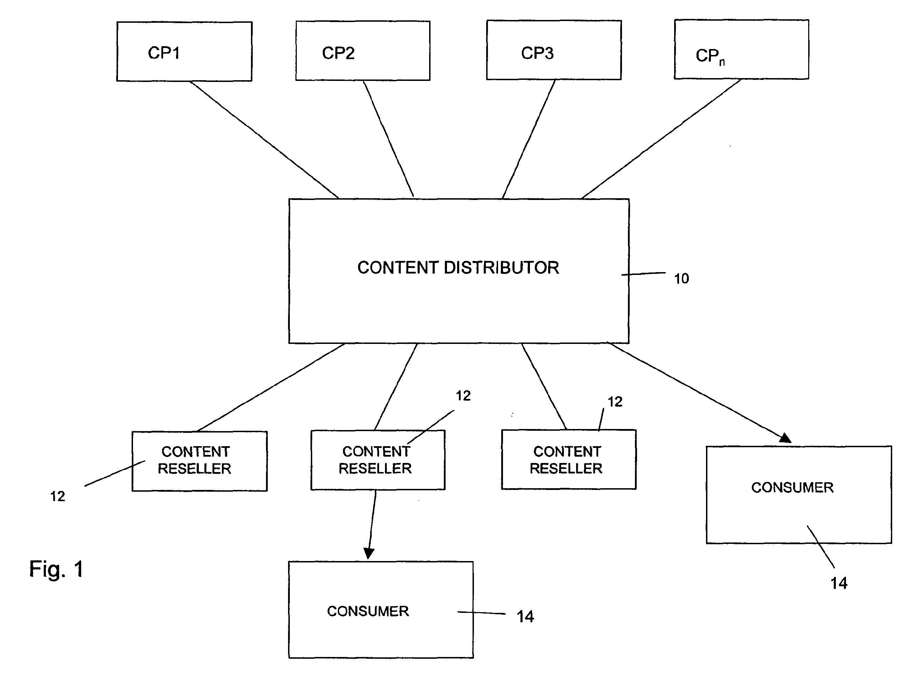

Referring now to Fig. 1, in the commercial model envisaged by the present invention content, such as music, literary or dramatic works, films or other moving images, or indeed any artistic or other work whatsoever which is at some stage converted into electronic form to enable its consumption by a consumer (i.e. "electronic content") is created by Content Providers CP₁ to CPₙ. The Content Providers CP (which may vary from e.g. a recording artist of world renown to a previously unpublished author) distribute their content through a content distributor 10 (such as a record company), who in turn uses content resellers 12 (such as record shops) to sell content to a consumer 14; on occasions content may also be sold to consumers 14 directly by the content distributor. Generically a person (whether natural or legal) who sells content for money or money's worth is known hereinafter as a commercial distributor, and this term is additionally intended to cover any person acting on behalf or for a commercial distributor (as are any of the other terms used in this specification in connection with parties who perform an act).

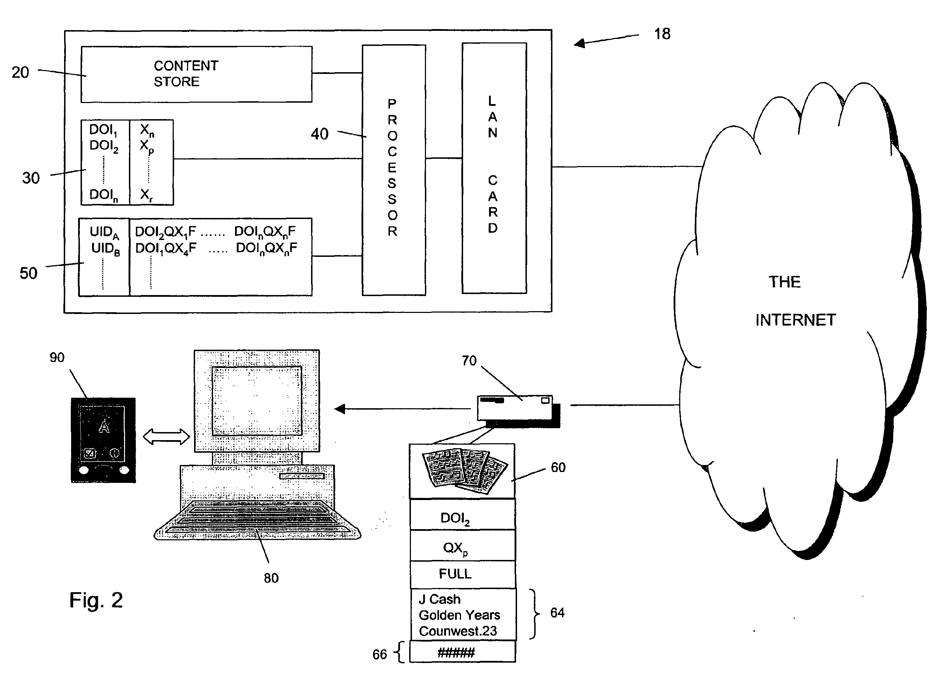

Referring now to Fig. 2, a commercial distributor Y stores, manages and distributes content from a server 18. The server 18 includes a first memory 20 in which content is stored, and each piece of content is indexed in the content store by an identifier known as a DOI, which is globally unique for a given piece of content, such that all copies of a given piece of content share the same identifier, but different pieces of content will have a different identifier. One identifier is known as a Digital Object Identifier. From the point of view of the commercial distributor Y it is desirable to keep a record of the number of copies of each piece of content that has been sold; from this the commercial distributor can keep track of which pieces of content are the most popular with their customers. To this end, the server 18 of the commercial distributor Y has a further memory called the content ledger 30, which in the present example is simply a character or character string stored in connection with each DOI, and whose instantaneous value is representative of the number of copies of the content identified by the DOI which have been sold. In the illustrated example the content ledger 30 simply stores a number X against each DOI, where X is the number of copies sold. Upon conclusion of a sale of one or more copies of a given piece of content, the processor 40 of the commercial distributor increments the number X, stored against the DOI of the content which has been sold, by the number of copies sold. It follows therefore that if commercial distributor Y is the only authorised distributor of the content, then the character string DOIₙXᵣ, representing the sale to a particular consumer of the Xᵣth copy of the content denoted by the identifier DOIₙ, will be globally unique. However, in virtually all cases more than one commercial distributor offers a given piece of content, and it is thus possible that the same character string could be assigned to represent two different sales of the same piece of content by different commercial distributors (typically, though not necessarily), to different consumers. Because it is desirable to assign a globally unique identifier to each sale, a further character or character string Q is added to the identifier DOIₙXᵣ, to create a globally unique identifier DOIₙXᵣQ, where Q is a distributor identifier distinguishing commercial distributor Y from every other commercial distributor. This unique identifier DOIₙXᵣQ, thus not only identifies the particular purchase, but also the content which was the subject of the purchase and the distributor from whom the content was purchased; further licence states (e.g. indicative of a time-limited licence, or licences that prevent sharing with peers may be provided).

The identifier DOIₙXᵣQ is used in a third element of the memory architecture of server 18, known as the user licence directory 50, which is a record of each user registered with the commercial distributor Y, and for each such user, a record of all content sold (and therefore licences granted) to that user. As can be seen from Fig. 2, users are represented in the licence directory by a user identifier UID, against which a list of identifiers having the form DOIXQ are stored. Thus for example the user UID_{A} has purchased pieces of content for which licences identified by DOI₁X₂Q/F to DOIₙXᵣQ/F have been granted, while user UID_{B} has purchased a piece of content for which a licence identified by DOI₁X₄/F has been granted. The final character F is a licence status indicator, and indicates that the licences are full licences as opposed to temporary ones, denoted by the character T.

Sale of a piece of content, e.g. the content denoted by the DOI "DOI₂", which in the present example is a song by the artist Johnny Cash, takes place as follows. Once the commercial distributor Y has received either payment, or an undertaking to pay (e.g. the submission of credit card details) for the content from a consumer A, who in the present example is already registered with commercial distributor Y and has the user identification UID_{A}, the processor 40 retrieves a copy of the content from the content store 20. This action automatically causes an incrementation of the number X stored in the content ledger 30 against DOI₂; in the present example a single copy of DOI₂ has been retrieved, and so X is incremented by one, to the value Xₚ. The user licence directory 50 is then updated to reflect the purchase of DOI₂ by UID_{A}, by adding a record to the directory comprising the user licence identifier DOI₂QXₚ/F; the Xpth copy of content DOI₂, sold by commercial distributor Q with a full licence (F). Henceforth therefore, user licence directory 50 will enable commercial distributor Y to determine that user UID_{A} has purchased a copy of DOI₂. In a further modification the user licence directory will also store the time at which the update was made.

Following update of the user licence directory, the user licence identifier DOI₂QXₚ/F, together with metadata 64 (in this example the title of the artist, the name of the song, and the filename of the file in the content store 20), and a further identifier 66 known as a hash, which together comprise the complete licence data set, are bundled into a message 70 together with content 60. The hash provides a further security measure to ensure that the content is genuinely what it purports to be, and is an identifier such as a character string generated by processing the content itself through a known program. One analogy for the hash is the chassis number on a vehicle ostensibly identified perfectly adequately through the number or licence plate visible to all. The message 70 is then sent via the network, which in the present example is the internet, to the consumer A (whose user ID with commercial distributor Y is UID_{A}), who downloads the new content 60, and licence data 62 from a desktop computer 80 to a personal digital assistant (PDA) 90.

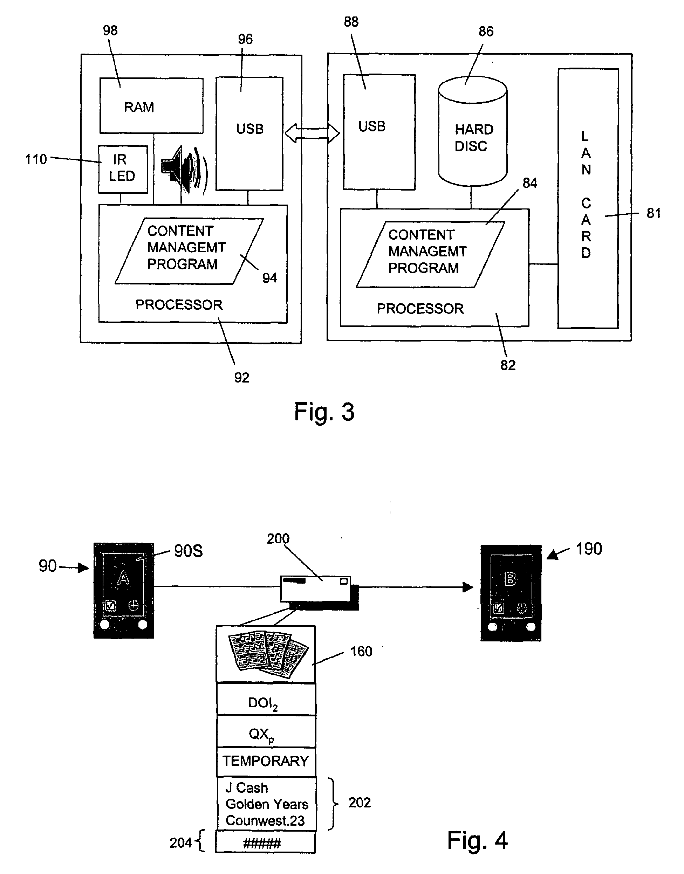

Referring now to Fig. 3, the computer 80 is connected to the internet via a LAN card 81, and includes a processor 82 which runs a content management program 84.
Within the computer 80, the content management program 84 stores and retrieves content on hard disc storage 86, and transmits content to the PDA 90 via a communication channel, e.g. a serial bus 88. The PDA likewise includes a processor 92, on which a further copy of the content management program 94 runs, and the processor 92 is connected to the computer via serial port 96, and also to an addressable memory 98. Within the PDA the content management program 94 stores and retrieves content from the addressable memory, and converts it to a form assimilable by the consumer, which in the present example (i.e. the case of music) is then sent to a loud speaker 100 within the PDA. The PDA also has a wireless output 110, typically either Bluetooth or infra red, which enables messages to be beamed over short distances to other PDAs.

While both the computer and PDA content management programs 84, 94 store and retrieve both content and licence data, for speed and economy of data processing content is only retrieved for consumption by a consumer, and transmitted between the computer 80 and PDA 90 when it is to be stored in memory that does not already contain a copy of the content. All other management activities are performed using the licence data, this being a relatively small amount of data. The two content management programs 84, 94 are adapted to synchronise their activities. Thus for example, upon connection or "docking" of the PDA to the computer, the PDA content management application 94 is adapted to retrieve all licence data stored in the memory 98 and to send this to the computer 80 via the serial port 96. When the computer content management application 84 receives such licence data, it is adapted to perform a reconciliation operation, comparing the licence data received from the PDA with the licence data stored within the hard disc storage 86. In the event that new licence data has been transmitted to the computer 80 from the PDA, the computer content management application 84 updates the licence data retained on the hard disc 86 by adding to the hard disc any licence data not already there, and then instructs the PDA content management program 94 to retrieve and send to the computer 80 copies of all content in respect of which new licences have been stored on the computer hard disc 86. The computer content management program 84 is also adapted automatically to connect to the commercial distributor Y, in this example via the internet, upon docking of the PDA to the computer, and to retrieve and send to the commercial distributor all licence data currently held on the hard disc storage 86. Preferably all management activities described above of both content management programs 84, 94 are invisible to the user.

Referring now to Fig. 4, in accordance with the method of the present invention, content may legitimately be passed directly from one consumer to another, typically using the wireless port 110. To transmit a copy of a piece of content to another consumer using a PDA, consumer "A" instructs the content management program running in PDA 90, via a graphical user interface on the screen 90S of the PDA to beam a copy of a specified piece of content. Upon receipt of this instruction, the content management application running in the PDA 90 retrieves a copy of the content 160, prepares licence data for that content, which in this case includes the licence identifier DOI₂QXₚ/T (the "T" denoting a temporary licence status), metadata 202 and the hash 204 for the content, and bundles both into a message 200 which is then transmitted via the wireless port 110 to the PDA 190 of a consumer B. In the present example a copy of the content management program is already running on the PDA 190 of consumer B. However the content management application is also adapted to transmit a copy of itself to the PDA of consumer B upon instruction from consumer A, and this would occur prior to the transmission of any content.

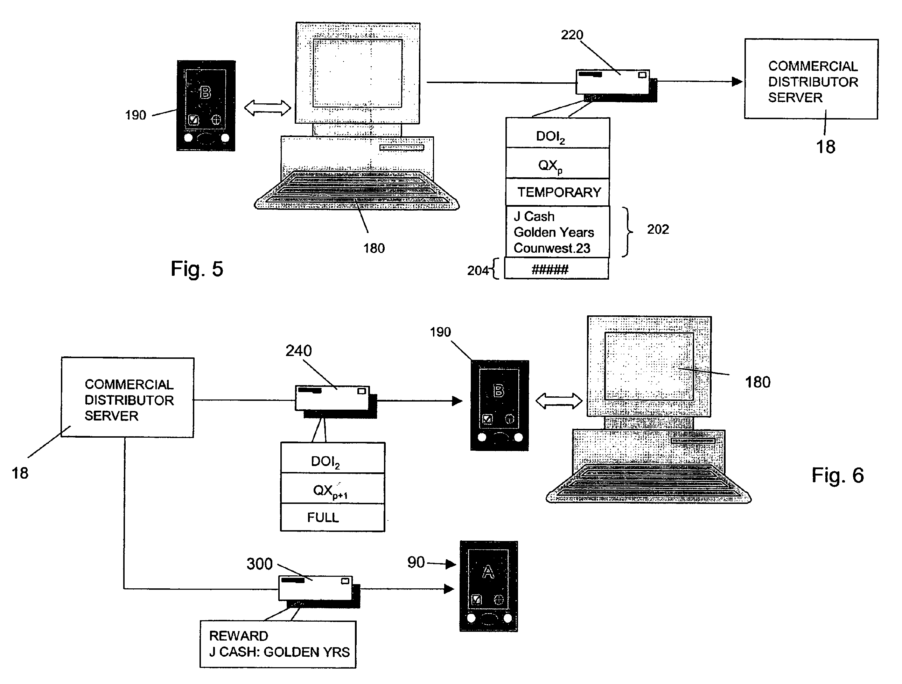

Referring now to Fig. 5, consumer B is now able to consume the content transmitted from consumer A, even though he has not paid for it. When consumer B docks his PDA 190 to the computer 180, the content management programs in the PDA and computer perform the transmission, reconciliation and storage updating operations described above in relation to the licence data and content, causing, *inter alia* retransmission of the message 200 from the PDA to the computer 180. Docking of the PDA 190 with the computer also causes the content management program to connect via the network to the server 18 of commercial distributor Y, whereupon all the stored licence data held by the computer 180 of consumer B, including that relating to the content beamed to consumer B from consumer A, is sent to the commercial distributor, together with the user identification UID_{B} of consumer B. Illustrated in Fig. 5 is the transmission of message 220, containing the licence data in respect of content acquired from user A; the further licence data which would be transmitted is omitted for the sake of clarity

Upon receipt of the licence data sent by computer 180, the server of commercial distributor Y performs a reconciliation operation, comparing the licence data received with the licence data which is held in the user licence directory 50 against user identification UID_{B}. In the event that the licence data received from computer 180 is identical to that currently held in the user licence directory 50, no further action is needed. If however the licence data differs there are generally two possible outcomes. In the first event the received licence data differs in that there is a licence having a full status (denoted by the status identifier "F") of which there is no record in the user licence directory 50, or the hash is not in agreement with DOI. In this situation the unaccounted licence is treated as a rogue licence, the consumer is sent instructions to delete the licence data and content, and then asked if they wish to purchase a genuine copy. A more common outcome of the reconciliation is that of the present example, where a licence having a temporary status T is found; in the present example the licence identifier DOI₂QXₚ/T. In this event the commercial distributor saves a copy of the licence identifier in a temporary cache, and then sends an invitation to purchase a genuine copy.

Referring now to Figs. 2 and 6, if the consumer agrees, and payment is received by the commercial distributor (including an indication that payment has been dispatched, or an indication that satisfies the commercial distributor to that effect, or to the effect that an intention to pay exists), the processor of the server 18 increments the number X stored in the content ledger 30 against the DOI of the content, in this example DOI₂, by one, and adds the new licence identifier DOI₂QXₚ₊₁/F, which is unique to this transaction, to the list of user licence identifiers held against the user identifier UID_{B} in the user licence directory 50. The consumer B is then sent an updated licence identifier DOI₂QXₚ₊₁/F (the F now indicative of a full licence status) in a message 240, which the content management programs in the computer 84 and PDA 94 then substitute for the temporary licence identifier.

In the event that the consumer does not agree to pay for the content, the server then asks the consumer if they wish to delete the content from their local storage, in this case their PDA and computer. If the user agrees (for example because they do not like the music which they have received and therefore do not wish to pay for it), the server communicates with the content management programs and instructs them to delete all copies of that content and all licence data related to it. If the user does not wish to pay, and does not wish to delete the content that has not been paid for, the server 18 may for example operate to deny the user access to their personal content store (described in more detail below), and, possibly following a further warning, deletes all the content in their store, all licence identifiers in their user licence directory, and cancels their user registration.

Once the transaction with consumer B is concluded, and assuming that consumer B has paid for the content, the processor 40 of the server 18 then retrieves the temporary licence identifier DOI₂QXₚ/T from the cache, and searches the user licence directory 50 to find the user identifier against which the character string DOI₂QXₚ is stored (since as explained above on page 6, this character string is globally unique to a particular transaction with the commercial distributor Y). Once the user identifier UID_{A} (the user ID of consumer A) against which DOI₂QXₚ is stored is located, the processor then sends a message 300 to consumer A including reward points, typically redeemable against further content when sufficient points have been accumulated, and the metadata 202 of the content the consumer is being rewarded for transmitting.

In a further development, the commercial distributor provides further reward to a consumer in the event that they transmit a copy of the content management program to a consumer who then registers as a user with the commercial distributor.

A further incentive of registering with the commercial distributor, and therefore engaging in the lawful purchase and ownership of content is the ability to manage content in a more flexible manner as a result of having access to a personal content store held in the server by the commercial distributor on behalf of each of its users, in which all the content owned by the user is stored. This obviates the need for the user to have to store personally (including the necessity of providing back-up contingency) all content which he or she owns, so that instead the consumer may retrieve from the personal content store held by the server, those pieces of content which they require over any given time period.

Content and messages containing content are typically constructed using Simple Object Access Protocol ("SOAP"), which is known *per se* and which will therefore not be discussed further, and transmitted using Hyper-Text Transfer Protocol, widely known as "http".

As mentioned above, references in this specification to an act performed by a party is intended to include within its scope the performance of that act by another party on behalf of the first party. References to the sending of data is intended to include where appropriate the sending of a copy of the aforementioned data. References to items of information technology capability (e.g. storage) being possessed by a person/organisation include that person or organisation having the opportunity to use such items or capability, and are not intended t denote any particular ownership status, nor any particular geographical relationship or physical proximity.

The invention has been illustrated using a PDA to store content, which connects to the network via a computer. It would however be possible to use other storage, or to connect the PDA directly to the network by equipping the PDA with a LAN car, for example.

## Claims

1. A method of distributing electronic content across an information technology network comprising the steps of:
selling to a first consumer (A) a first electronic copy of the content, transmitting the first copy of the content across the network to the first consumer, and attaching to the first copy first licence data (DOI₂QXₚ/F), including status data (F) indicative of the legitimate nature of the first copy;
storing the first copy of the content upon at least a first storage apparatus (90) in the possession of the first consumer;
copying the first copy to produce a second electronic copy of the content and attaching to the second copy second licence data (DOI₂QXₚ/F), including status data (T) indicative of temporary legitimacy of the second copy; and
transmitting the second copy and attached licence data to a second storage apparatus (190) in the possession of a second consumer.

2. A method according to claim 1 further comprising the steps of:
connecting the second consumer and the commercial distributor via the information technology network, and sending to a commercial distributor of the content, via the network, at least sufficient of the second licence data to enable identification of: (a) the content to which it relates, and (b) the status of the second copy.

3. A method according to claim 2 further comprising the steps of:
sending to the commercial distributor payment for the second copy of the content;
subsequent to receipt of payment by the commercial distributor, sending from the commercial distributor to the second consumer, via the information technology network, replacement second licence data, including at least replacement status data indicative of legitimacy of the second copy of the content; and
updating within the second storage apparatus the replacement second licence data attached to the second copy of the content.

4. A method according to claim 3, further comprising the step, upon connection of the second consumer to commercial distributor via the network, of registering the second consumer with the commercial distributor, and providing to the second customer as a consequence of registration, the ability to store, on electronic storage of the commercial distributor, copies of all content legitimately owned by the second consumer.

5. A method according to claim 4 wherein registration entitles the second consumer to receive a reward in the event that the second consumer transmits a further copy of the content to a further consumer and the further consumer then pays the commercial distributor for the further copy.

6. A method according to claim 4 wherein the first and second storage apparatus' are adapted to run a content management program which, *inter alia,* retrieves content from storage and converts it into an assimilable form for the first and second consumers, the method further comprising the step of copying the content management program in the possession of the first consumer, and transmitting the copy of the program to the second storage apparatus.

7. A method according to claim 4 wherein the first and second storage apparatus' are adapted to run a content management program which, *inter alia,* retrieves content from storage and converts it into an assimilable form for the first and second consumers, and wherein the content management program is adapted automatically upon connection of the second storage apparatus to the network to send to the commercial distributor of the content, via network, at least sufficient of the second licence data to enable identification of: (a) the content to which it relates, and (b) the status of the second copy.

8. A method according to claim 7 wherein the second storage apparatus connects to the network via a computer.

9. A method according to claim 3 wherein the first licence data includes a first identifier unique to the first consumer and the content purchased from the commercial distributor in the first sale.

10. A method according to claim 9 wherein the second licence data which has status data indicative of temporary legitimacy of the second copy, includes the first identifier.

11. A method according to claim 10 wherein the second licence data sent by the second consumer to the commercial distributor includes the first identifier.

12. A method according to claim 11 wherein the replacement second licence data includes a second identifier unique to the second consumer and the content purchased from the commercial distributor in the sale of the second copy of the content to the second consumer.

13. A method according to claim 12 wherein the first unique identifier is used by the commercial distributor as an indication that the second copy of the content was transmitted to the second consumer by the first consumer.

14. A method according to claim 13 further comprising the step, subsequent to receipt of payment for the second copy of the content, of the commercial distributor rewarding the first consumer.

15. A method according to claim 7 wherein the second storage apparatus comprises a licence cache controlled by the content management application, and in which data for each licence acquired by the second consumer is stored, the method further comprising the step, performed by the content management program upon connection of the second storage apparatus to the network, of sending to the commercial distributor, in respect of each licence in the licence cache, at least sufficient of the licence data to enable identification of: (a) the content to which it relates, and (b) the status of the second copy.

16. A method according to claim 15 further comprising the step of the commercial distributor comparing the licence data received from the second consumer with licence data stored by the commercial distributor for the second consumer to determine whether there are any inconsistencies.
